# EUROPEAN PATENT APPLICATION

(11) **EP 4 530 965 A1**
(43) Date of publication of application: **02.04.2025**
(21) Application number: 23306636.4
(22) Date of filing: 29.09.2023
(51) Int. Cl.: G06Q 50/40, G08G 5/00

(54) **METHOD AND SYSTEM FOR COMPUTING A MISSION PLAN FOR AT LEAST ONE ELECTRIC OR HYBRID ELECTRIC AIRCRAFT**

(71) Applicant: THALES, 92190 Meudon (FR)
(72) Inventor: BOUDREAULT, Raphaël, QUÉBEC, QC G1P 4P5 (CA); LAFOND, Daniel, QUÉBEC, QC G1P 4P5 (CA); DION, Stéphane, QUÉBEC, QC G1P 4P5 (CA)
(74) Representative: Lavoix

(57) **Abstract**

The invention concerns a method and system for computing a mission plan for at least one aircraft powered by electric energy or by electric and fuel generated energy. The system (2) is configured to receive input information including aircraft information, infrastructure information, and flight routes information, and to implement modules for:
- acquiring (22) mission specifications,
- acquiring user preferences (24) and encoding (26) the user preferences as a multi-criteria scoring scheme,
- selecting (28) at least one electric energy consumption model and one electric energy charge model, based on said mission specifications,
- executing (30, 30₁..., 30_{N}) at least one multi-criteria constrained optimization algorithm, trained by machine learning, for mission planning, wherein each optimization algorithm is given as objective the multi-criteria scoring scheme, the optimization algorithm being further provided with the input information, mission specifications and the selected energy models, each optimization algorithm providing as output a mission plan comprising, for each aircraft, an electricity charging duration at each mission terminal.

## Description

The present invention concerns a method and system for computing a mission plan for at least one aircraft powered by electric energy or by electric and fuel generated energy.

The invention also concerns a related computer program product and a related non-transitory computer readable medium having a program stored thereon for executing a computer program to perform the method for computing a mission plan for at least one aircraft powered by electric energy or by electric and fuel generated energy.

The invention is in the field of aircraft mission planning with energy management optimization.

Air mobility traditionally involves aircraft powered by combustion engines using carbon-based fuels such as kerosene. However, in the past years, the interest in alternative propulsion engines significantly increased with the general aim of reducing aircraft greenhouse gas emissions. For that purpose, electricity-powered aircraft have been proposed, as well as hybrid electric aircraft, powered using a combination of internal combustion engines with electrical power sources.

It is envisioned that the future of air mobility, also known as Advanced Air Mobility (AAM), will mainly rely on electric and hybrid electric aircraft, including but not limited to Unmanned Aerial Vehicles (UAV) with Vertical Take-off and Landing (VTOL) or Short Take-off and Landing (STOL). These new vehicles will allow new transportation means for people and cargo within a city (Urban Air Mobility, UAM) or across cities, suburbs, and villages (Regional Air Mobility, RAM). In any case, each aircraft will need to be involved in a significant number of multi-flight missions, even possibly on demand, of varying length and time.

A mission of one of several aircraft such as UAVs is described using a mission plan in coherence with given mission specifications. In particular, for a multi-flight mission, the mission specifications include the type and number of involved aircraft, the flight routes described as segments called legs, and the mission schedule. This includes, for each flight, the route legs specifications (waypoints, altitude, distance, airspeed, trajectory angle), taxi phases specifications (duration, speed), payload, and scheduled time of departure/arrival at the departure and arrival terminals.

For electric or hybrid electric powered aircraft, it is also necessary to manage the energy consumption during each flight, so as to ensure feasibility and mission security. Indeed, for electric powered aircraft, the energy management is important in terms of energy consumption and in terms of considering the electricity charging infrastructure available. Electricity charging requires a non-negligible amount of time, as well as a considerable number of infrastructure and operational constraints.

Furthermore, missions involving hybrid electric aircraft require additional decisions on the energy type to use, either fuel, electricity or both, during each flight leg.

Weather conditions, including wind and temperature, also have a significant impact on flights, notably on energy consumption estimations, thus may be advantageously considered during mission planning and replanning phases.

There is a need to optimize mission planning for aircraft powered by electric energy or by electric and fuel generated energy, while taking into account the multiple constraints mentioned above.

This and other objects are achieved by a method for computing a mission plan for at least one aircraft powered by electric energy or by electric and fuel generated energy, the mission being defined by mission specifications including a multi-flight path between a plurality of successive mission terminals, the method being implemented in a system comprising a processing unit and a user interface. The method comprises:
- receiving input information including aircraft information, infrastructure information, and flight routes information,
- acquiring mission specifications,
- acquiring user preferences and encoding the user preferences as a multi-criteria scoring scheme,
- selecting at least one electric energy consumption model and one electric energy charge model, based on said mission specifications,
- executing at least one multi-criteria constrained optimization algorithm, trained by machine learning, for mission planning, wherein each multi-criteria constrained optimization algorithm is given as objective said multi-criteria scoring scheme, the optimization algorithm being further provided with the input information, mission specifications and the selected energy models, each multi-criteria constrained optimization algorithm providing as output a mission plan comprising, for each aircraft, an electricity charging duration at each mission terminal.

In embodiments of the invention, the method for computing a mission plan for at least one aircraft powered by electric energy or by electric and fuel generated energy comprises one or more of the following features, considered alone or according to all technically possible combinations.

The mission plan further comprises an amount of electricity charging at each mission terminal and a target speed between two successive flight legs.

The mission plan further comprising an idle time at each mission terminal.

At least one aircraft is a hybrid electric aircraft powered by electric and fuel generated energy, wherein the method further comprises selecting one fuel consumption model, and each mission plan further comprises a fuel charging amount at each mission terminal and an indication of an energy type to use among fuel, electricity, or both during each flight leg.

The plurality of multi-criteria constrained optimization algorithms are executed substantially in parallel, each multi-criteria constrained optimization algorithm outputs being evaluated by a score representative of the satisfaction of the objective, and wherein the mission plans are ranked according to their score.

Information on the multi-criteria constrained optimization algorithms, including their ranking, is displayed on the user interface, the system being further configured to receive a user input for selecting one of the mission plans as a baseline mission plan.

The method further comprises receiving a user modified mission plan, comprising at least one user modification of a first mission plan provided by one multi-criteria constrained optimization algorithm, the method further comprising updating the multi-criteria scoring scheme using an automatic learning method, such that the modified mission plan score is assured to be greater than the first mission plan score while the updated scoring scheme stays close to the original scoring scheme in terms of the chosen metric.

The multi-criteria scoring scheme representative of the user preferences is constructed hierarchically using configurable utility and aggregation functions.

The method further comprises receiving an update of at least one input among the mission specifications or user preferences, and further repeating the selecting and executing steps using the at least one updated input.

The mission involves at least one aircraft powered by electric and fuel generated energy, the method comprising selecting several energy models comprising an electric energy consumption model, a fuel consumption model and an electric energy charge model, each of said energy models being based on a conventional theoretical function fine-tuned by supervised machine learning training.

The supervised machine learning training is based on stored historical data relative to executed multi-flight missions.

The method further comprises triggering online supervised machine learning training of fine-tuned energy models automatically after historical data is received, and automatically optimizing the duration of a training window of historical data to be used.

The input information further comprises information relative to predicted weather conditions.

The invention relates also to a system for computing a mission plan for at least one aircraft powered by electric energy or by electric and fuel generated energy, the mission being defined by mission specifications including a multi-flight path between a plurality of successive mission terminals, the system comprising a processing unit and a user interface, the processing unit being configured to :
- receive input information including aircraft information, infrastructure information, and flight routes information, and to implement:
- a module for acquiring mission specifications,
- a module for acquiring user preferences and encoding the user preferences as a multi-criteria scoring scheme,
- a module for selecting at least one electric energy consumption model and one electric energy charge model, based on said mission specifications,
- a module for executing at least one multi-criteria constrained optimization algorithm, trained by machine learning, for mission planning, wherein each multi-criteria constrained optimization algorithm is given as objective said multi-criteria scoring scheme, the optimization algorithm being further provided with the input information, mission specifications and the selected energy models, each multi-criteria constrained optimization algorithm providing as output a mission plan comprising, for each aircraft, an electricity charging duration at each mission terminal.

The invention relates also to a computer program including software instructions which, when executed by a programmable electronic device, implement a method for computing a mission plan for at least one aircraft powered by electric energy or by electric and fuel generated energy as briefly described above.

The invention also relates to a non-transitory computer readable medium having a program stored thereon for executing a computer to perform the method for computing a mission plan for at least one aircraft powered by electric energy or by electric and fuel generated energy as briefly described above.

Further characteristics and advantages of the present invention will become apparent from the following description, provided merely by way of non-limiting example, with reference to the enclosed drawings, in which:
- Figure 1 shows a system for computing a mission plan for at least one aircraft according to an embodiment of the present invention;
- Figure 2 is a flowchart of the main steps of a method for computing a mission plan for at least one aircraft according to an embodiment of the present invention;
- Figure 3 is a flowchart of a process for automatic fine-tuning of the energy models.

A method and system for computing a mission plan for at least one electric or hybrid electric aircraft will be described hereafter, according to various embodiments.

As already explained, the term hybrid electric aircraft refers to an aircraft powered by electric energy or by fuel generated energy, a hybrid electric aircraft being equipped with both an electric energy storage unit (e.g. one or several batteries) and a fuel tank, and adequate engines.

The method and system are applicable in particular for Unmanned Aerial Vehicles, UAVs, but may also be applied for other types of aircraft, for example aircraft with a pilot on-board.

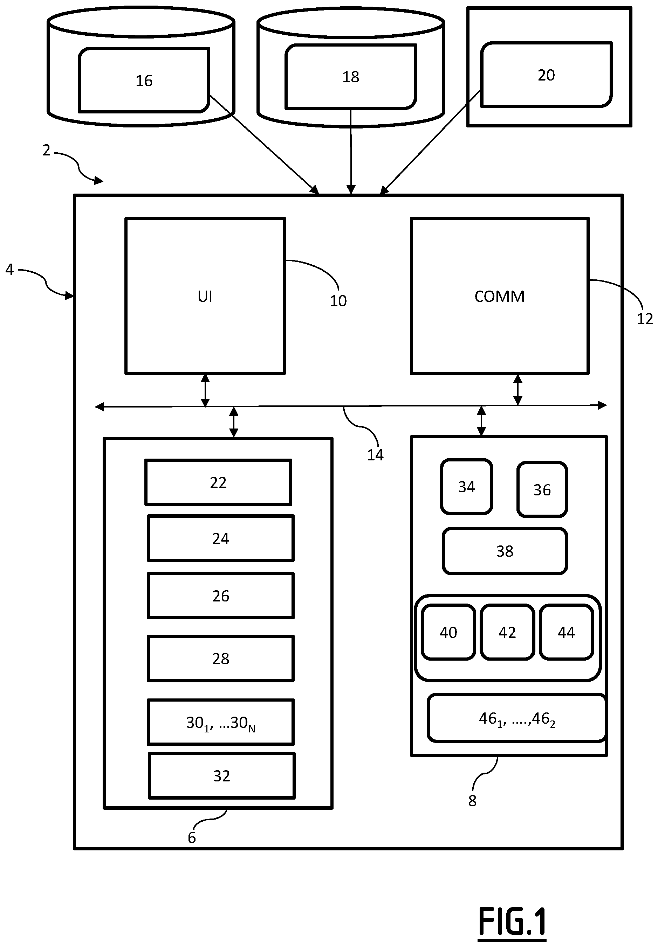

Figure 1 represents a system 2 for computing a mission plan for at least one electric or hybrid electric aircraft.

The system 2 for computing a mission plan may be implemented in a ground center, operated by an aircraft dispatcher.

According to an embodiment, the proposed system may be integrated in a Flight Planning System (FPS), in order to optimize the mission planning or replanning with respect to the optimization of the energy management. Classically, a FPS is implemented in a ground center and operated by a user, such as a dispatcher. A FPS integrating the proposed system would be an augmented FPS with improved energy management capacities.

In an alternative embodiment, the proposed system 2 may be adapted to communicate with a FPS.

According to an embodiment, the output of the proposed system may be communicated, via a wireless communication interface, to the electric or hybrid electric aircraft, and further recorded in an on-board Flight Management System (FMS) for application. The FMS is an on-board system, as described in standard AEEC ARINC702A.

In the case where the aircraft has a pilot on-board, the pilot may validate the recording and implementation of the mission plan output by the proposed system.

In the case of an unmanned aircraft, the mission plan output by the proposed system may be automatically recoded and implemented by the on-board FMS.

The system 2 comprises one or several interconnected electronic devices 4.

In the example of figure 1, a single electronic device 4 is represented schematically, comprising a processing unit 6, consisting of one or more computing processors, adapted to execute computer program instructions when the electronic device 4 is powered on.

The electronic device 4 further comprises an electronic memory unit 8, a user-interface 10 and a communication interface 12. All these units of the electronic device 4 are adapted to communicate via an internal communication bus 14.

The user interface 10 comprises a graphical user interface, such as a screen, for displaying data and information, and also comprises a unit configured to receive data input by a user, such as an operator of the system 2.

According to an embodiment, the user interface 10 is a classical user interface comprising a screen and data input peripherals (keyboard, etc.). Alternatively, the user interface 10 is implemented as a touch screen which assembles the functionalities of input and output peripheral of the electronic device 4.

The electronic device 4 is configured to receive input information comprising information 16 relative to the aircraft, information 18 relative to the infrastructure available, and flight routes information 20. Optionally, the input information further comprises information relative to weather conditions.

For example the aircraft information 16 comprises, for each aircraft model, information on physical properties of the aircraft, such as weight, maximal speed, takeoff speed, cruise altitude, maximal payload. For an electric aircraft, the aircraft information comprises information on battery properties, such as capacity and weight. For a hybrid electric aircraft, the aircraft information comprises the information on battery capacities as well as fuel tank information, such as fuel type, fuel tank capacities, average fuel consumption according to speed.

In a use case scenario, when the system is used by an aircraft operator managing a fleet of aircraft, the aircraft information 16 is stored in a database and describes all aircraft of the fleet of aircraft.

In various embodiments, the aircraft information 16 may be stored in a database, accessible using the communication unit 12, via requests.

Furthermore, the aircraft information 16 may be automatically updated, for example to indicate further features of the aircraft available such as the initial energy level state, such as for example the level of initial charge of the battery of each aircraft.

The infrastructure information 18 contains information relative to the available infrastructure within a given geographical perimeter. Infrastructure information 18 includes for example information about terminals where the aircraft might land or take off from, such as airports, specific requirements thereof, notices and costs, as well information regarding electricity charging facilities availability, speed, and costs and/or fuel charging facilities availability, speed, and costs. The infrastructure information may also be stored in a dedicated database, and loaded from the database via a request, for example specifying the geographical perimeter concerned. A geographical perimeter may also be defined by default.

The information relative to flight routes 20 may include predicted mission flight routes, waypoints and scheduling, for example provided by a FPS.

The information relative to the weather conditions contains weather information and predictions for a given time period, as specified or defined by default. The predicted weather conditions include wind, temperature and visibility. Such information on weather conditions may be obtained from an external source on demand, such as a distant meteorological server. The information relative to weather conditions may be automatically updated in case of important changes, or updated on demand.

The electronic device 4 is configured to implement a module 22 for acquiring mission specifications 34, and optionally mission constraints 36, for example from the electronic memory unit, via communication with an external system or via the UI.

The mission specifications 34 include a multi-flight mission between a plurality of successive mission terminals, in particular: one or several flight routes and scheduling, including for each flight path, also called flight route, the route legs specifications (waypoints, altitude, distance, airspeed, trajectory angle), scheduled time of departure/arrival, and the flight payload. The mission specifications may also include taxi phases specifications, such as duration and speed of the taxi phases.

The mission constraints 36 include for example schedule requirements, payload regulations, noise pollution considerations, and security specifications.

According to a possible scenario, the mission constraints are defined by default values, for example imposed by regulations, and they are pre-recorded.

According to a variant, the mission specifications 34 integrate the mission constraints.

The mission specifications 34 and the optional mission constraints 36 when available are stored in the electronic memory unit 8.

The electronic device 4 is configured to implement a module 24 for acquiring user preferences and an encoding module 26 for encoding user preferences as a multi-criteria scoring scheme 38.

For example, the user preferences are acquired via the III 10, provided as an input by a user, preferably by an expert of the aircraft dispatching, referred to as expert user hereafter.

In another embodiment, the user preferences are already stored in the electronic memory unit 8.

The user preferences criteria include, but are not limited to, mission carbon footprint, total duration, energy cost, delay costs. The user preferences, specified by a given user, comprise selected values or ranges of values for those criteria.

The user preferences are encoded as a multi-criteria scoring scheme 38, aggregated as a specific and highly configured hierarchy of criteria.

The electronic device 4 is further configured to implement a selecting module 28 for selecting at least one electric energy consumption model 40 and one electric energy charge model 42, based on the mission specifications, and optionally on mission constraints.

In the case of an electric aircraft, the selecting module 28 selects an electric consumption model and an electric charge model.

In the case of a hybrid electric aircraft, the selecting module 28 further selects a fuel consumption model 44.

Each of these models is based on a conventional theoretical function fine-tuned by the result of a supervised machine learning model, such as a neural network, trained using past flight mission historical data to predict energy consumption or energy charge.

The electronic device 4 is further configured to implement a module 30 executing one multi-criteria constrained optimization algorithm or preferably several modules 30₁...30_{N}, each executing a different multi-criteria constrained optimization algorithm.

Preferably, the modules 30₁...30_{N} are executed sensibly in parallel.

Each multi-criteria constrained optimization algorithm is given as objective (or target) the multi-criteria scoring scheme, the optimization algorithm being further provided with the input information, mission specifications and the selected energy models. Each multi-criteria constrained optimization algorithm 30i provides as output a mission plan 46i comprising, for each aircraft, an electricity charging duration, and, when applicable, a fuel charging duration at each mission terminal. The mission plan may also comprise the charging amount of electricity, and, when applicable, the amount of fuel charging at each mission terminal, as well as an indication of the energy type to use (either fuel, electricity, or both) during each flight leg.

Further, the mission plan preferably also comprises the target aircraft speed during each flight leg.

The mission plan may also comprise, for each mission terminal, the idle time. The idle time is the time remaining, at each mission terminal, which is not used for energy charging, i.e. for electricity and, if applicable, for fuel charging. The idle time may for example be used for other actions, such as maintenance or cleaning.

Advantageously, the testing of a plurality of multi-criteria constrained optimization algorithms allows to maximize the chances of quickly obtaining good optimization solutions, given that each algorithm may have some flaws in some practical situations.

Advantageously, the computational time required to reach an optimized multi-flight mission plan is minimized.

Furthermore, the electronic device 4 is further configured to implement a display module 32, for displaying the mission plan or plans computed on the user interface 10.

Then a user, typically an expert user, may validate or amend the result.

The user preferences and/or the mission specifications, and/or the mission constraints when available, may be amended.

Therefore, iterative improvement and re-planning may be applied.

According to an embodiment, each module 22, 24, 26, 28, 30₁...30_{N}, 32 is implemented as software code, and cooperate to achieve a computer program, including software instructions which, when executed by a programmable electronic device, implement a method for computing a mission plan for at least one aircraft powered by electric energy or by electric and fuel generated energy.

Preferably, the modules 22, 24, 26, 28, 30₁...30_{N}, 32 are memorized on a non-transitory storage device readable by a processing system, for example a non-transitory storage of a server system, such as a random access memory (RAM), read only memory (ROM), remote access hardware drive (conventional hard drive or cloud storage) accessible through direct connection, wired or wireless or a combination thereof.

According to a variant, each of the modules 22, 24, 26, 28, 30₁...30_{N}, 32 is implemented in the form of a programmable logic component, such as a Field Programmable Gate Array (FPGA), a general-purpose graphics processing unit(GPGPU), or a dedicated integrated circuit such as an application specific integrated circuit (ASIC).

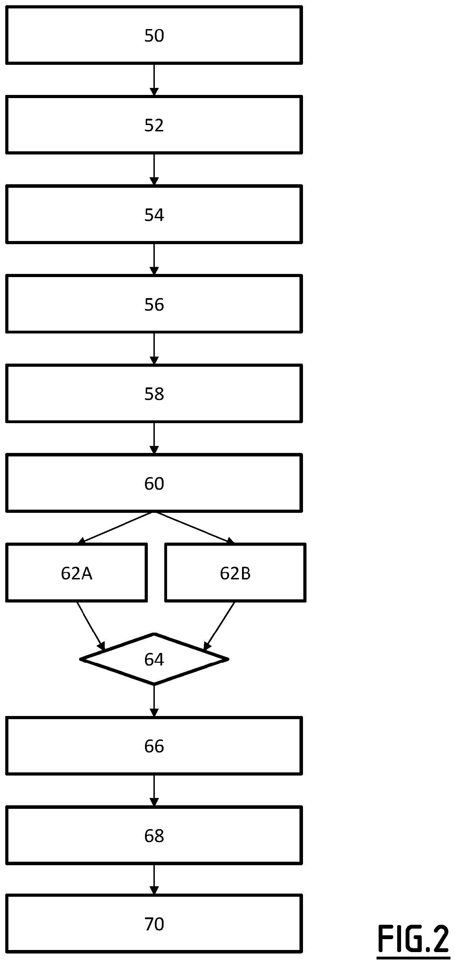

A flowchart of the main steps of an embodiment of a method for computing a mission plan for at least one aircraft powered by electric energy or by electric and fuel generated energy is presented in figure 2.

In the presented embodiment, a user, such as a mission planning expert, intervenes in the process of mission planning.

The method comprises a user authentication step 50, for example using an authentication module according to any suitable known authentication method. After the authentication step 50, the user is actually identified by a user ID.

The method further comprises a receiving step 52 of receiving input information, including aircraft information, infrastructure information, flight routes information, and optionally, information on weather conditions, followed by a step 54 of acquiring mission specifications, and optionally mission constraints.

Furthermore, the user preferences are acquired (step 56), either via the user interface or from a memory unit if some predefined user preferences are already stored in association with the user ID.

The method further comprises encoding 58 the user preferences as a multi-criteria scoring scheme.

In some embodiments, the multi-criteria scoring scheme associated to the user preferences may be already stored in the memory unit.

The user preferences are encoded using a conventional multi-criteria model, which relies on a definite number of predetermined criteria such as mission carbon footprint, total duration, energy cost, delay costs.

According to an embodiment, the multi-criteria scoring scheme representative of the user preferences is constructed hierarchically using configurable utility and aggregation functions as defined in the Multi-Attribute Utility Theory framework from the article "A decade of application of the Choquet and Sugeno integrals in multicriteria decision aid" by Grabisch, M., & Labreuche, C. published in 4OR 6(1), 2008.

A preferable aggregation function is the Choquet integral, but can also be a conventional weighted sum.

This multi-criteria scoring scheme may be manually defined using the interface, but may also be imported from an external source such as a pre-built MYRIAD model, as defined in the article "MYRIAD: A tool suite for MCDA » by Labreuche, C., & Hu6d6, F. L. published in Int. Conf. of the Euro Society for Fuzzy Logic and Technology (EUSFLAT), 204-209, 2005.

The method further comprises a step 60 of automatically selecting one electric energy consumption model and one electric energy charge model, based on said mission specifications and optionally on said mission constraints for either an electric or a hybrid electric aircraft.

In the case of a hybrid electric aircraft, further a fuel consumption model is selected.

The electricity and fuel consumption models estimate the amount of energy consumed by the aircraft in function of its physical features, extracted from the information relative to the aircraft received, the route legs specifications extracted from the mission specifications and, optionally, the weather conditions.

It is advantageous to take into account the weather conditions, in particular, the wind and temperature which may have a non-negligible impact on energy consumption during a flight.

The electric energy charge model estimates the charging duration according to aircraft battery specifications, charging station specifications, and temperature.

According to an embodiment, if predicted weather conditions are not available, average values for wind and temperature may be used, or historical values extracted from historical data stored relative to previous flights, for example considering the season, etc.

According to an embodiment, each of the energy consumption and energy charge model, referred to by the generic term "energy models", is based on a theoretical function.

According to a preferred embodiment, each of the energy consumption and energy charge model is based on a theoretical function fine-tuned by the result of a supervised machine learning model, a neural network, trained using past flight mission historical data.

The historical data used by the energy models include executed mission specifications (aircraft, flight routes, infrastructure, weather conditions, constraints) and energy-related decisions (executed schedule, energy consumption details, charging details). The historical data may be stored in the electronic memory unit 8 of the electronic device 4 or in a system accessible database.

The method comprises next the execution of one or several multi-criteria constrained optimization algorithm(s).

Advantageously, at least one of the multi-criteria constrained optimization algorithms is based on a conventional constrained optimization approach able to demonstrate the optimality of its generated best mission plan. In other words, at least one algorithm can terminate with an optimality proof.

For example, two multi-criteria constrained optimization algorithms are executed at step 62, comprising at step 62A, executing a first algorithm based on a *Mixed-Integer Programming* (MIP) approach relying on the CPLEX solver; at step 62B, executing a second algorithm implementing a specific heuristic approach designed for quickly finding suboptimal plans following predetermined rule sets.

Preferably, the executions of steps 62A and 62B are carried out sensibly in parallel, so as to minimize the computational time required.

In step 62A, the programming paradigm implies formulating the optimization problem (constraints and objective) with linear mathematical expressions and integer or real-valued variables. The implemented MIP model is an exhaustive mathematical description of the mission specifications, where the main variables correspond to the charging amount of fuel and electricity and the idle time at each mission's terminal, as well as the energy type to use (either fuel, electricity, or both) during each flight leg. There are also variables for the target aircraft speed during each flight leg. It also involves classical linear approximations of the energy models, transformed as grid-sampled functions. The Choquet aggregation for the objective function is also rewritten in a linear mathematical form. This algorithm is able to terminate with an optimality proof of its best-found solution.

In step 62B, the implemented heuristic focuses on generating a mission plan using as much electricity or fuel as possible, depending on the user preferences. The algorithm simply decides iteratively, from the origin to the destination, sets of decisions which minimally respect constraints and follow its core rule sets. The latter ignore some optimization opportunities, such as the cost differences between terminals and some schedule requirements. No approximation of the energy models is required for this algorithm.

According to an embodiment, each mission plan which is output as a solution by a multi-criteria constrained optimization algorithm comprises the charging duration of fuel and electricity and/or the idle time at each mission's terminal. The mission plan may also comprise the charging amount of fuel and electricity as well as the energy type to use (either fuel, electricity, or both). Furthermore, each mission plan may comprise the target aircraft speed during each flight leg.

A stop criteria is tested at step 64, consisting of checking whether the MIP algorithm terminated with an optimality proof, or if an internal timeout of a given duration, for example of five minutes, was reached. When the test 64 is validated, the optimization process is completed.

The method comprises a display 66, on the user interface, of the mission plans generated, ranked by their resulting objective value, corresponding to the user preferences satisfaction value.

In other terms, each mission plan generated by a multi-criteria constrained optimization algorithm is being evaluated by the multi-criteria scoring scheme giving a score representative of the satisfaction of the user preferences, and the scores provide a ranking. The score may also be displayed on the user interface.

The method comprises further receiving 68 an input from the expert user, either setting one of the generated mission plans as baseline or amending one of the generated mission plans before setting it as baseline.

The baseline plan is validated by the expert user and may be stored as an initial mission plan to apply.

If the expert user provides some modifications to one of the generated mission plans, called here a first mission plan, so as to transform the first mission plan into a modified mission plan, the method comprises a further optimization step 70.

The further optimization step 70 updates the multi-criteria scoring scheme using an automatic learning method, such that the modified mission plan score is assured to be greater than the first mission plan score while the updated scoring scheme stays close to the original scoring scheme in terms of the chosen metric

The automatic learning method may also include as input past learning requests to further fine-tune the updated scoring.

In an embodiment, the automatic learning method is a specific constrained optimization method providing an updated multi-criteria scoring scheme as an adjusted mathematical formulation of its root aggregation, while minimizing its distance to the original scoring scheme. The distance here refers to a given metric, for example the Manhattan or Euclidian distance between the parameters from the updated and the original scheme, or the modified mission plan score difference between the updated and the original scoring schemes. Constraints in the optimization method involve the multi-criteria scoring scheme mathematical formulation and required ranking improvements.

In an embodiment, the further optimization step 70 provides the updated multi-criteria scoring scheme as an adjusted mathematical formulation of the root Choquet aggregation that minimizes the Manhattan distance between the weights of the updated multi-criteria scoring scheme and the weights of the original multi-criteria scoring scheme.

The updated multi-criteria scoring scheme is stored for further use.

Advantageously, subsequent optimization requests are always up to date to the latest user preferences modelling so as to improve the overall performance of the system for that specific user.

The method as described with reference to figure 2 may be applied at an initial planning stage, before a mission, but may also be applied similarly for re-planning, in case of change of any of the input information, or in case of changes of user preferences.

Furthermore, the method may also be applied during an operational mission.

If an expert user is connected to the system, the expert user inputs may override the previously stored mission plans or user preferences. In other words, each manual change carried by an expert user, who is also an authorized user, is automatically saved and processed for a subsequent optimization request.

The expert user is also able to update the current mission specifications by changing the aircraft specifications (e.g., its current energy level states), the predicted mission flight routes and scheduling (e.g., following any operational delays) or the infrastructure data (e.g., following any airport deviation), or by pulling up-to-date weather conditions data. The user is also able to update the mission constraints, if provided, while additionally locking parts of the first mission plan, which is a deprecated plan consequently to the changes. The expert user inputs are interpreted as hard constraints, which are taken into account when executing again the method as described with respect to figure 2.

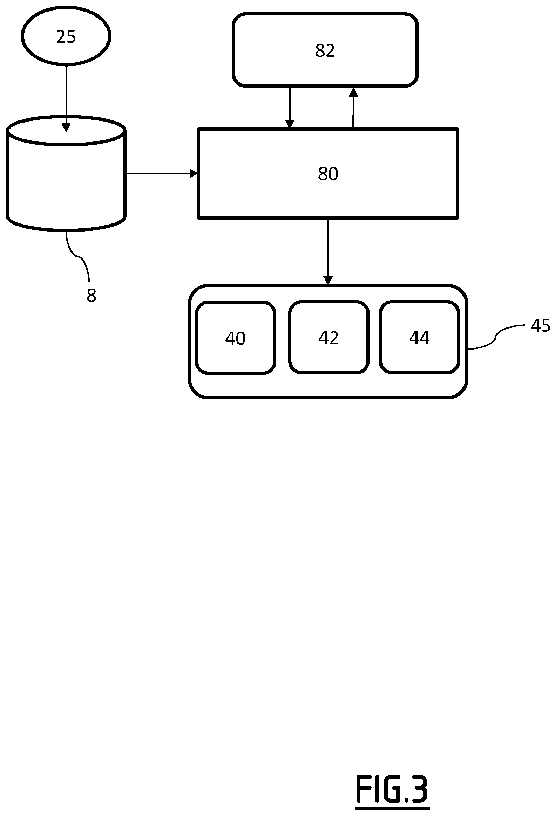

Figure 3 is a flowchart of a method for fine-tuning the energy consumption and energy charge models, based on historical data 25.

The historical data 25 used by the energy models include executed mission specifications (aircraft, flight routes, infrastructure, weather conditions, constraints) and energy-related decisions (executed schedule, energy consumption details, charging details).

The historical data 25 is stored in a database, for example in the memory unit 8, along with the other information related to the mission and energy consumption and energy charge models.

According to an alternative, the historical data 25 is stored on external memory and accessed by the process.

In particular, the historical data 25 contain one or several energy consumption models which predict the energy consumption, either electric energy or fuel, based on of physical features of the aircraft, the route legs specifications extracted from the mission specifications and the weather conditions, such as wind and temperature.

The fine-tuning uses actual historical data for leaning the parameters 82 of the fine-tuned models during an online machine learning step 80. The historical data 25 contains data on actual electrical and fuel consumption, actual weather conditions, etc.

The machine learning applied is for example online supervised machine learning, using for example neural networks.

The implementation of machine learning algorithms may follow conventional online learning approaches, retraining the underlying parameters of the algorithms using the augmented dataset including the historical data 25, and re-optimizing the hyper-parameters 82 (batch size, number of layers, etc.). Each of these learning algorithms also includes in its hyper-parameters set a concept drift manager, i.e., a learnable forgetting function which implies a "training window" that ignores any older (deprecated) data beyond a set threshold.

For example, the duration of the training window may be set to 2 years of historical data.

Advantageously, the duration of the training window is automatically optimized.

The historical data older than the duration of the training window is "forgotten", i.e. ignored in the retraining, so as to manage the drift issues arising from batteries and equipment degradation.

Following the training, the fine-tuned energy consumption and charge models 45 are stored for further use by the system.

Preferably, as soon as new historical data 25 is available, the fine-tuning process is triggered automatically, so as to ensure that the energy consumption and energy charge models are optimized. The models may be trained for a specific aircraft type or for each aircraft in the fleet individually, so as to take into account that each unique battery may vary in capacity and charge/discharge performance and its evolution in time.

Advantageously, the proposed system and method provide an interactive human-machine interface for energy management decision support, ensuring a configurable solution yielding expert-approved plan alternatives generated by several concurrent optimization methods.

Advantageously, the multi-flight planning takes into account user preferences and mission constraints, when available, globally maximizing user satisfaction across multiple criteria.

Advantageously, the energy consumption and the energy charge are efficiently managed, and the related prediction models are adapted according to mission specifications and available flight data, using online learning to refine models and manage concept drift issues arising from batteries and equipment degradation.

## Claims

1. Method for computing a mission plan for at least one aircraft powered by electric energy or by electric and fuel generated energy, the mission being defined by mission specifications including a multi-flight path between a plurality of successive mission terminals, the method being implemented in a system (2) comprising a processing unit (6) and a user interface (10), and being **characterized in that** it comprises:
- receiving (52) input information including aircraft information, infrastructure information, and flight routes information,
- acquiring (54) mission specifications,
- acquiring (56) user preferences and encoding (58) the user preferences as a multi-criteria scoring scheme,
- selecting (60) at least one electric energy consumption model and one electric energy charge model, based on said mission specifications,
- executing (62A, 62B) at least one multi-criteria constrained optimization algorithm, trained by machine learning, for mission planning, wherein each multi-criteria constrained optimization algorithm is given as objective said multi-criteria scoring scheme, the optimization algorithm being further provided with the input information, mission specifications and the selected energy models, each multi-criteria constrained optimization algorithm providing as output a mission plan comprising, for each aircraft, an electricity charging duration at each mission terminal.

2. The method of claim 1, the mission plan further comprising an amount of electricity charging at each mission terminal and a target speed between two successive flight legs.

3. The method according to claims 1 or 2, the mission plan further comprising an idle time at each mission terminal.

4. The method according to any of claims 1 to 3, wherein at least one aircraft is a hybrid electric aircraft powered by electric and fuel generated energy, wherein the method further comprises selecting one fuel consumption model, and wherein each mission plan further comprises a fuel charging amount at each mission terminal and an indication of an energy type to use among fuel, electricity, or both during each flight leg.

5. The method according to claims 1 to 4, wherein the plurality of multi-criteria constrained optimization algorithms are executed substantially in parallel, each multi-criteria constrained optimization algorithm outputs being evaluated by a score representative of the satisfaction of the objective, and wherein the mission plans are ranked according to their score.

6. The method according to claim 5, wherein information on the multi-criteria constrained optimization algorithms, including their ranking, is displayed (66) on the user interface, the system being further configured to receive (68) a user input for selecting one of the mission plans as a baseline mission plan.

7. The method according to claim 6, further comprising receiving a user modified mission plan, comprising at least one user modification of a first mission plan provided by one multi-criteria constrained optimization algorithm, the method further comprising updating the multi-criteria scoring scheme using an automatic learning method, such that the modified mission plan score is assured to be greater than the first mission plan score while the updated scoring scheme stays close to the original scoring scheme in terms of the chosen metric.

8. The method according to any of claims 1 to 7, wherein the multi-criteria scoring scheme representative of the user preferences is constructed hierarchically using configurable utility and aggregation functions.

9. The method according to any of claims 1 to 8, further comprising receiving an update of at least one input among the mission specifications or user preferences, and further repeating the selecting (60) and executing (62A, 62B) steps using the at least one updated input.

10. The method according to any of claims 1 to 9, wherein the mission involves at least one aircraft powered by electric and fuel generated energy, the method comprising selecting several energy models comprising an electric energy consumption model, a fuel consumption model and an electric energy charge model, each of said energy models being based on a conventional theoretical function fine-tuned by supervised machine learning training.

11. The method according to claim 10, wherein the supervised machine learning training is based on stored historical data relative to executed multi-flight missions.

12. The method according to claim 11, comprising triggering online supervised machine learning training of fine-tuned energy models automatically after historical data is received, and automatically optimizing the duration of a training window of historical data to be used.

13. The method according to any of claims 1 to 12, wherein the input information further comprises information relative to predicted weather conditions.

14. A computer program comprising including software instructions which, when executed by a programmable electronic device, implement a method for computing a mission plan for at least one aircraft powered by electric energy or by electric and fuel generated energy according to any of claims 1 to 13.

15. System for computing a mission plan for at least one aircraft powered by electric energy or by electric and fuel generated energy, the mission being defined by mission specifications including a multi-flight path between a plurality of successive mission terminals, the system comprising a processing unit and a user interface, the processing unit (6) being configured to :
- receive input information including aircraft information, infrastructure information, and flight routes information, and to implement:
- a module (22) for acquiring mission specifications,
- a module (24) for acquiring user preferences and encoding (26) the user preferences as a multi-criteria scoring scheme,
- a module (28) for selecting at least one electric energy consumption model and one electric energy charge model, based on said mission specifications,
- a module (30, 30₁..., 30_{N}) for executing at least one multi-criteria constrained optimization algorithm, trained by machine learning, for mission planning, wherein each multi-criteria constrained optimization algorithm is given as objective said multi-criteria scoring scheme, the optimization algorithm being further provided with the input information, mission specifications and the selected energy models, each multi-criteria constrained optimization algorithm providing as output a mission plan comprising, for each aircraft, an electricity charging duration at each mission terminal.
